Europäisches Patentamt

European Patent Office

Office européen des brevets

(11) Veröffentlichungsnummer: **0 387 364**
**A1**

(12) # EUROPÄISCHE PATENTANMELDUNG

(21) Anmeldenummer: **89104402.6**

(51) Int. Cl.⁵: **G11B 5/31, G11B 5/265**

(22) Anmeldetag: **13.03.89**

(43) Veröffentlichungstag der Anmeldung:
**19.09.90 Patentblatt 90/38**

(84) Benannte Vertragsstaaten:
**AT CH DE FR GB IT LI NL SE**

(71) Anmelder: **Siemens Aktiengesellschaft
Wittelsbacherplatz 2
D-8000 München 2(DE)**

(72) Erfinder: **Scholz, Christian, Dr.-Ing.
Engert 6
D-8035 Stockdorf(DE)**
Erfinder: **Pachonik, Horst, Dipl.-Phys.
Lindenring 35
D-8028 Taufkirchen(DE)**
Erfinder: **Poese, Martin, Dipl.-Ing.
Flurstrasse 8
D-8043 Unterföhring(DE)**
Erfinder: **Schulz, Gerd, Dr.
Am Pulverl 20
D-8070 Ingolstadt(DE)**

(54) **Dünnfilm-Magnetkopfeinheit.**

(57) Die Dünnfilm-Magnetkopfeinheit weist zwei auf einem Substrat (1) schichtweise aufgebaute und damit übereinanderliegenden Magnetkopfsysteme (2, 5 bis 9 bzw. 9 bis 16) mit je einem nur zur Aufzeichnung bzw. Wiedergabe benutzten Magnetspalt (51 bzw. 101) auf. Dabei ist die Magnetspule (7) des unmittelbar auf dem Substrat aufgebauten Magnetkopfsystemes (2, 5 bis 9) in einer zugehörigen, einen seiner Magnetschenkel bildenden weichmagnetischen Grundschicht (2) derart vergraben angeordnet, daß eine zugehörige, den anderen Magnetschenkel dieses Magnetkopfsystemes bildende Deckschicht (9) im wesentlichen plan und parallel zur Substratoberfläche verlaufend ausgebildet ist. Damit wird es bei technologisch vertretbarer Bauhöhe im Spulenbereich möglich, die Magnetkopfsysteme hinsichtlich ihrer Aufzeichnungs-bzw. Wiedergabefunktion individuell zu optimieren.

FIG 18

## Dünnfilm-Magnetkopfeinheit

Die Erfindung bezieht sich auf eine Dünnfilm-Magnetkopfeinheit gemäß dem Oberbegriff des Patentanspruches 1.

Dünnfilm-Magnetkopfsysteme, insbesondere bei Magnetplattenspeichern eingesetzt, werden üblicherweise als ein gemeinsames Aufzeichnungs- und Wiedergabesystem aufgebaut, d. h. mit dem gleichen Magnetkopfsystem wird über einen einzigen Magnetspalt sowohl aufgezeichnet als auch wiedergegeben. Derartige Ausführungsformen sind z. B. aus EP-A-012 910 oder auch EP-A-0 131 716 bekannt. Bei diesen Dünnfilm-Magnetköpfen ist auf einem nichtmagnetischen Substrat eine magnetische Grundschicht und darüber in einem gewissen Abstand eine Deckschicht angeordnet. Die Grund- und die Deckschicht bilden je einen der Kernschenkel des Dünnfilm-Magnetkopfes. Im Bereich der Polzunge liegen Grundschicht und Deckschicht mit geringem Abstand, der Spaltlänge übereinander und weisen eine vorgegebene Breite, die Polbreite auf. An dem der Polzunge abgewandten Ende sind beide Kernhälften in einem Kontaktbereich miteinander kontaktiert. Im dazwischenliegenden Mittelbereich sind sie durch nichtmagnetische Zwischenschichten voneinander getrennt, in die eine den Kontaktbereich spiralförmig umschließende Magnetspule eingebettet ist.

In der Magnetbandspeichertechnik werden konventionell Magnetköpfe in Kernblech-Stapeltechnik oder in Halbschalentechnik eingesetzt. Bei diesen Bandspeicherköpfen ist es für eine störungsfreie Wiedergabe günstig, bei der Wiedergabe mit einem schmaleren Magnetspalt zu arbeiten als bei der Aufzeichnung. Deshalb werden in diesem Anwendungsbereich für optimierte Aufzeichnungs- und Wiedergabesysteme zwei getrennte Magnetköpfe benutzt. Dabei ist in der Regel die Spaltlänge des Wiedergabekopfes nur etwa halb so groß wie die des Aufzeichnungskopfes. Außerdem werden unterschiedliche Polbreiten, worunter man die Breite der Kernschenkel im Bereich der Polzunge versteht, für die beiden Magnetköpfe benutzt. Dabei ist die Polbreite für die Aufzeichnung größer als für die Wiedergabe. Damit wird vermieden, daß der Wiedergabekopf aufgrund von Ungenauigkeiten in seiner Zuordnung zum magnetischen Aufzeichnungsträger, hier einem Magnetband, beim Lesen aus der aufgezeichneten Spur läuft.

Man kann nun konstruktiv den Wiedergabekopf extrem nahe an den Aufzeichnungskopf heranrücken und diese beiden Magnetköpfe zu einem einzigen Verbund, einer Magnetkopfeinheit zusammenführen. Derartige Verbundmagnetköpfe ermöglichen dennoch eine getrennte Optimierung der Einzelköpfe und damit Verbesserungen vor allem hinsichtlich zweier wesentlicher Speicherkenngrößen: Das Aufzeichnungssystem kann bezüglich niedriger Induktivität für eine bessere Anpassung an die Aufzeichnungselektronik, hoher Spaltfeldstärke zur besseren Ummagnetisierung von hochkoerzitiven Speicherschichten ausgelegt werden. Die Optimierung des Wiedergabesystemes kann auf ein besseres Auflösungsvermogen bzw. steilere Wiedergabeflanken der Wiedergabespannung gerichtet sein, was höhere lineare Speicherdichten und höhere Spurdichten ermöglicht. Auch liegt der Abstand des Nutzsignales vom Störsignal bei Verbundmagnetköpfen deutlich über dem Störabstand von Aufzeichnungs/Wiedergabeköpfen mit einem gemeinsamen Arbeitsspalt.

Dünnfilm-Magnetköpfe der eingangs genannten Art werden, wie erwähnt, vorzugsweise bei Magnetplattenspeichern eingesetzt. Hier wäre es besonders bei einer sehr hohen linearen Speicherdichte bei gleichzeitig hoher Flächenspeicherdichte mit Werten von mehr als 2000 tpi (tracks per inch) für einen störungsarmen Betrieb von großem Vorteil, wenn die aufgezeichnete Spur breiter wäre als die Ausdehnung der zur Wiedergabe benutzten Polbreite. Dadurch könnten Randstörungen vermieden werden, die Spurfindung und Spurhaltung wäre wesentlich erleichtert und Schwankungen im Wiedergabepegel ließen sich reduzieren.

Um dies zu erreichen, wäre es an sich denkbar, zwei Dünnfilm-Magnetköpfe in bekannter Ausführung einfach übereinander zu setzen. Man könnte dabei den Arbeitsspalt des Aufzeichnungssystemes breiter und höher, d. h. breiter bezüglich der Vertikalen zur Spurtangente, ausführen als den Magnetspalt des Wiedergabesystemes. Eine derartige "Huckepack"-Struktur wäre der von bekannten Kernblech-Magnetköpfen vergleichbar. Dieser theoretische Ansatz ist aber in Dünnfilm-Technik in der Praxis nur schwer realisierbar. Schon bei einem konventionellen Dünnfilm-Magnetkopf, bei dem Aufzeichnungs- und Wiedergabesystem identisch sind, ist wegen des Platzbedarfes für die Kupferspule, häufig zweilagig ausgeführt, eine gewisse Bauhöhe - im Querschnitt gesehen - unvermeidbar. Bei einer Huckepack-Struktur lägen dann in dieser Querschnittsrichtung zwei Spulensysteme übereinander, so daß sich die technologischen Probleme bei der Herstellung von abknickenden Schichten vervielfachten. Außerdem müssen besondere Maßnahmen zur magnetischen Entkoppelung des Wiedergabesystemes vom Aufzeichnungssystem vorgesehen werden. Dazu muß zwischen dem Aufzeichnungs- und Wiedergabesystem eine bestimmte Anzahl von Kupfer- und Eisen/Nickel-Schichten eingefügt werden, die im Querschnitt zum Teil sehr weit über die Abmessungen der einzelnen Magnetkopfsysteme im Polbereich hinausragen. Wie angedeutet, läßt sich dies mit den in der Dünnfilm-Technik angewandten Herstellungsverfahren nur schwer verwirklichen. Grundsätzlich kann aus technologischen Gründen über eine bestimmte Aufbauhöhe des Magnetkopfsystemes nicht hinausgegangen werden.

Der Erfindung liegt daher die Aufgabe zugrunde, eine Dünnfilm-Magnetkopfeinheit der eingangs genannten Art zu schaffen, bei der - in der Funktion einem Verbundsystem konventioneller Kernblech-Magnetköpfe vergleichbar - ein in sich abgeschlossenes Aufzeichnungs-und ein ebensolches Wiedergabesystem unmittelbar hintereinander mit Hilfe einer Mehrzahl technologisch beherrschbarer Beschichtungs- und Ätzschritte aufgebaut ist und bei dem diese Systeme derart ausgebildet sind, daß mit der fertigen Magnetkopfeinheit eine breitere Spur auf dem magnetischen Aufzeichnungsträger aufgezeichnet wird als bei der Wiedergabe in Anspruch genommen wird.

Bei einer Dünnfilm-Magnetkopfeinheit der eingangs genannten Art wird diese Aufgabe erfindungsgemäß durch die im Kennzeichen des Patentanspruches 1 beschriebenen Merkmale gelöst. Bei dieser Lösung wird die Grundschicht des innenliegenden Magnetkopfsystemes bei der Herstellung zunächst stärker als bei konventionellen Dünnfilm-Magnetköpfen ausgebildet. In dieser verstärkten Grundschicht wird dann eine Vertiefung vorgesehen, die die Magnetspule samt den notwendigen Isolierschichten aufnimmt. Auf diese Weise wird das innenliegende Magnetkopfsystem gewissermaßen "vergraben". Dies erlaubt wiederum, die weichmagnetische Deckschicht, d. h. den obenliegenden Kernschenkel dieses Magnetkopfsystemes plan und parallel zur Oberfläche des Substrates auszuführen. Auf dieser planen Oberfläche läßt sich dann ein weiteres, das außenliegende Magnetkopfsystem aufbauen, ohne daß sich dabei technologisch nicht beherrschbare Topographien einzelner Schichten ergeben.

Auf diese Weise läßt sich eine Dünnfilm-Magnetkopfeinheit mit separaten Kopfsystemen für die Aufzeichnung bzw. die Wiedergabe mit aus der Dünnfilm-Technik bekannten und auch beherrschten Mitteln ausbilden. Damit ist die Voraussetzung geschaffen, das Aufzeichnungssystem und das Wiedergabesystem jeweils für die entsprechende Funktion individuell zu optimieren, wie sich aus in Unteransprüchen beschriebenen Weiterbildungen der Erfindung ergibt.

Ausführungsbeispiele der Erfindung werden im folgenden anhand der Zeichnung näher beschrieben. Dabei zeigt:

FIG 1 und 2 ausschnittsweise eine Draufsicht bzw. einen Querschnitt der prinzipiellen Struktur eines ersten, unmittelbar auf dem Substrat strukturierten Magnetkopfsystemes, insbesondere eines Aufzeichnungssystemes,

FIG 3 bis 7 schematisch in einer Illustration der Abfolge der technologischen Bearbeitungsschritte die Strukturierung der weichmagnetischen Grundschicht des Magnetkopfsystemes von FIG 1 und 2 in einer Ausführungsform,

FIG 8 bis 12 in ähnlicher Form die Strukturierung dieser weichmagnetischen Grundschicht für eine andere Ausführungsform,

FIG 13 und 14 in einem Querschnitt bzw. in einer Frontansicht das fertiggestellte innenliegende Magnetkopfsystem mit einer planen weichmagnetischen Deckschicht,

FIG 15 schematisch die Umrißform dieser Deckschicht,

FIG 16 und 17 eine weitere Ausführungsform für dieses innenliegende Magnetkopfsystem, aufgebaut auf einem weichmagnetischen Substrat,

FIG 18 und 19 in einem Querschnitt bzw. einer Frontansicht schematisch die fertig ausgebildete Dünnfilm-Magnetkopfeinheit mit einem Aufzeichnungssystem und einem darüberliegenden Wiedergabesystem und

FIG 20 bis 22 jeweils ein elektrisches Ersatzschaltbild dieser Dünnfilm-Magnetkopfeinheit zur Erläuterung unterschiedlicher Funktionen bei der Aufzeichnung bzw. der Wiedergabe.

Bekanntlich wird eine Vielzahl von Dünnfilm-Magnetköpfen gleichzeitig gefertigt, in dem von einem sogenannten Wafer, d. h. einer Substratscheibe ausgehend, auf dieser die Schichten bzw. Strukturen der einzelnen, rasterförmig angeordneten Magnetkopfsysteme gleichzeitig erstellt werden. Erst nach Fertigstellung des gesamten Aufbaus wird die Waferscheibe aufgetrennt, d. h. die Magnetköpfe werden voneinander separiert. In der folgenden Beschreibung von Ausführungsbeispielen einer erfindungsgemäß ausgebildeten Dünnfilm-Magnetkopfeinheit ist aus Gründen der Übersicht in der Zeichnung jeweils nur immer ein Ausschnitt aus dem Wafer dargestellt, der sich im wesentlichen auf ein einzelnes Magnetkopfsystem bezieht.

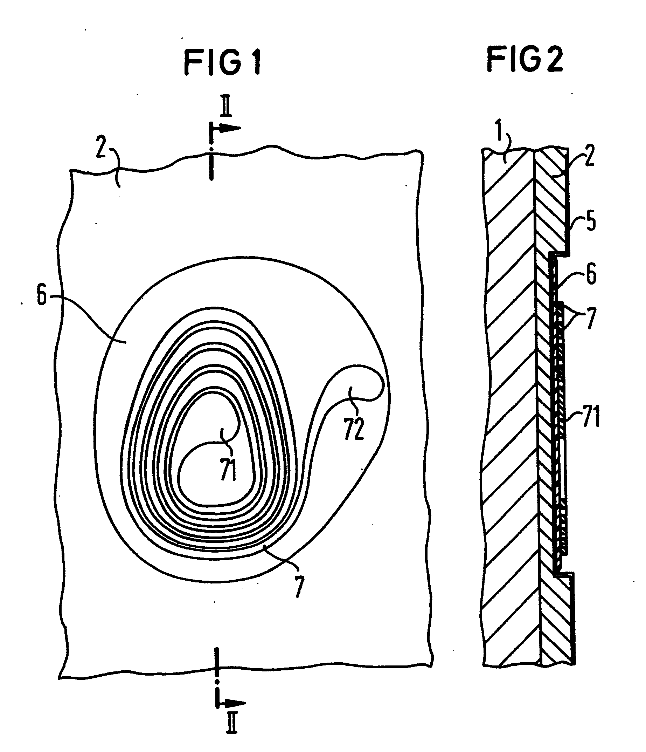

FIG 1 und 2 zeigen in einer Draufsicht bzw. in einem entsprechenden Querschnitt die grundsätzliche Struktur eines Aufzeichnungssystemes mit der fertig strukturierten Magnetspule. Dabei ist auf einem Substrat 1 aus Titancarbid oder einem anderen nichtmagnetischen Keramikmaterial eine hinreichend dicke weichmagnetische Schicht, z. B. aus NiFe aufgebracht. Diese weichmagnetische Schicht bildet die Grundschicht 2 für ein erstes Magnetkopfsystem, in die eine Vertiefung 21 mit der Ausdehnung der vorgesehenen Kopfgröße eingebracht ist.

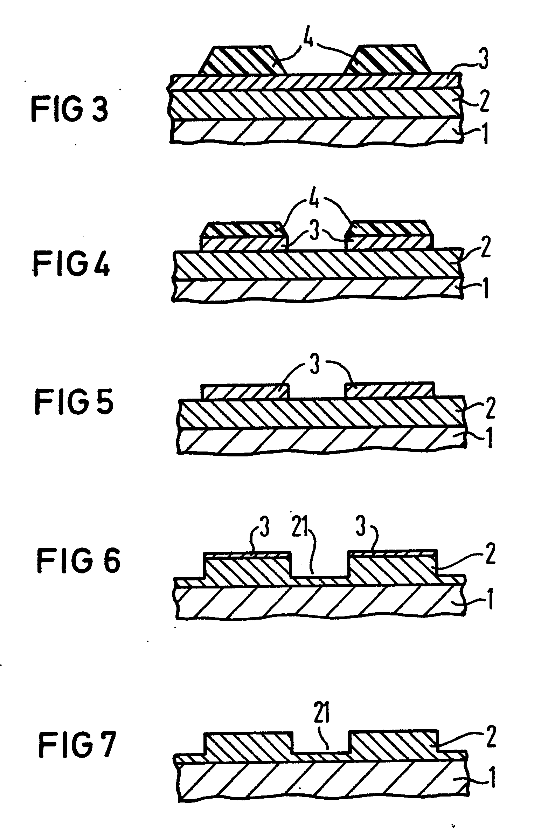

Mit den Mitteln der Dünnfilm-Technologie lassen sich solche Vertiefungen 21 auf verschiedene Weise realisieren. In FIG 3 bis 7 ist schematisch eine Abfolge mehrerer Verfahrensschritte für das Strukturieren solcher Vertiefungen dargestellt. Nach FIG 3 wird auf das nichtmagnetische Substrat 1 vollflächig die weichmagnetische Grundschicht 2 aufgebracht, beispielsweise aufgesputtert. Darüber wird, ebenso vollflächig, eine Metallmaskenschicht 3 beispielsweise aus Tantal oder Titan abgeschieden. Eine darübergelegte Fotoresistschicht ist bereits strukturiert dargestellt, sie bildet somit eine Fotoresistmaske 4.

FIG 4 illustriert die Strukturierung der Metallmaske 3 aus Tantal oder Titan. Dies geschieht mit Hilfe einer Ätzanlage durch reaktives Ionenätzen (RIE = reactive ion etching), einem in der Dünnfilm-Technologie bekannten und beherrschten Verfahren. Dabei werden die Fotoresistmaske 4 und zugleich die ungeschützten Teilflächen der Metallmaskenschicht 3 im Verhältnis der individuellen Ätzraten abgetragen, die Fotoresistmaske muß daher ausreichend dick bemessen sein.

FIG 5 zeigt, daß die Reste des Fotoresists entfernt werden und damit die Metallmaske 3 fertiggestellt ist. Diese Maske schützt dann die weichmagnetische Grundschicht 2 bei einem anschließenden Ionenstrahlätzen (RIBE = reactive ion beam etching) an den Stellen, an denen keine Vertiefungen 21 auftreten sollen. Auch das Ionenstrahlätzen ist als solches in der Dünnfilm-Technologie bekannt und bedarf daher hier keiner Erläuterung im Detail. In den FIG 6 und 7 sind die entsprechenden Schritte dargestellt, die schließlich zur gewünschten Struktur der Grundschicht 2 führen.

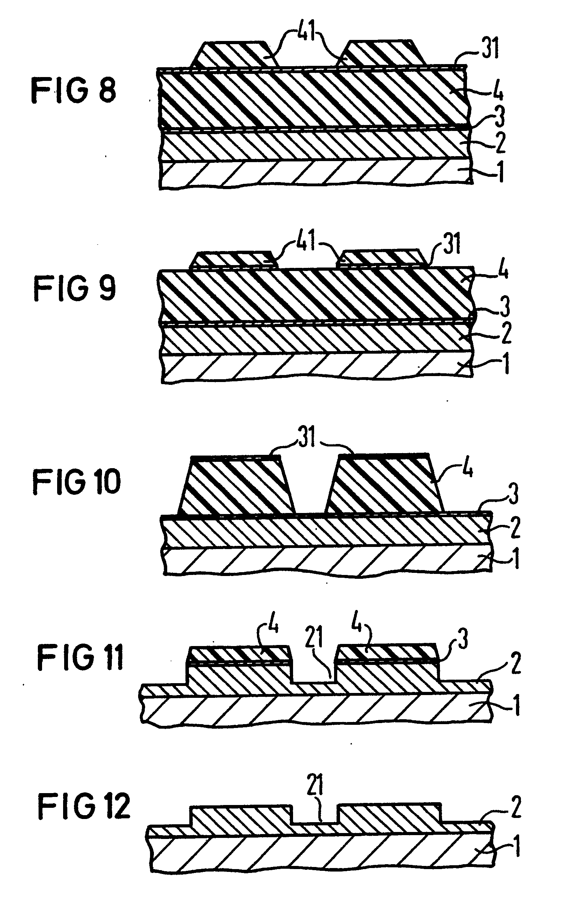

Eine weitere Möglichkeit für das Strukturieren der Vertiefungen 21 in der weichmagnetischen Grundschicht 2 ist in den FIG 8 bis 12 dargestellt. In diesem Fall wird ausschließlich mit Ionenstrahlätzen gearbeitet. Nach FIG 8 sind auf das Substrat 1 vollflächig bereits die weichmagnetische Grundschicht 2 und darüber die Metallmaskenschicht 3 aufgesputtert. Die Verhältnisse der individuellen Ätzraten beim Ionenstrahlätzen berücksichtigend, liegt über der Metallmaskenschicht 3 eine extrem dicke Fotoresistschicht 4, auf der eine weitere metallische Hilfsmaskenschicht 31 angeordnet ist. Diese wird mit einer Hilfsresistmaske 41 strukturiert.

Wie FIG 9 zeigt, wird zunächst die metallische Hilfsmaske 31 strukturiert und damit die Fotoresistschicht 4 teilweise freigelegt, so daß danach gemäß FIG 10 die eigentliche Fotoresistmaske 4 gebildet werden kann. FIG 11 und 12 zeigen dann wie im weiteren Verlauf des Ionenstrahlätzens mit dieser Maskenstruktur schließlich die Vertiefungen 21 aus der weichmagnetischen Grundschicht 2 herausgeätzt werden.

Damit ist dargelegt, wie die Vertiefungen 21 in der weichmagnetischen Grundschicht 2 strukturiert werden können. Zurückkehrend zu der Darstellung von FIG 2, zeigt diese nun, daß auf diese Struktur vollflächig eine den späteren Aufzeichnungsspalt 51 bildende Siliziumoxidschicht 5 aufgesputtert ist. Darüber ist als Isolationsschicht 6 Fotolack ca. 1 bis 2 $\mu$m dick in die Vertiefungen 21 eingebracht. Im Herstellungprozeß wird darüber vollflächig eine Kupferschicht abgeschieden, die in konventioneller Weise wieder mit Hilfe einer hier nicht dargestellten Fotoresistschicht zur in FIG 2 bereits fertig dargestellten Ma gnetspule 7 strukturiert wird. Deren Form ist in der Draufsicht von FIG 1 verdeutlicht. Im Zentrum der Spirale liegt ein Kontaktfleck 71, ein weiterer Kontaktfleck 72 ist seitlich neben der äußersten Spiralwindung angeordnet.

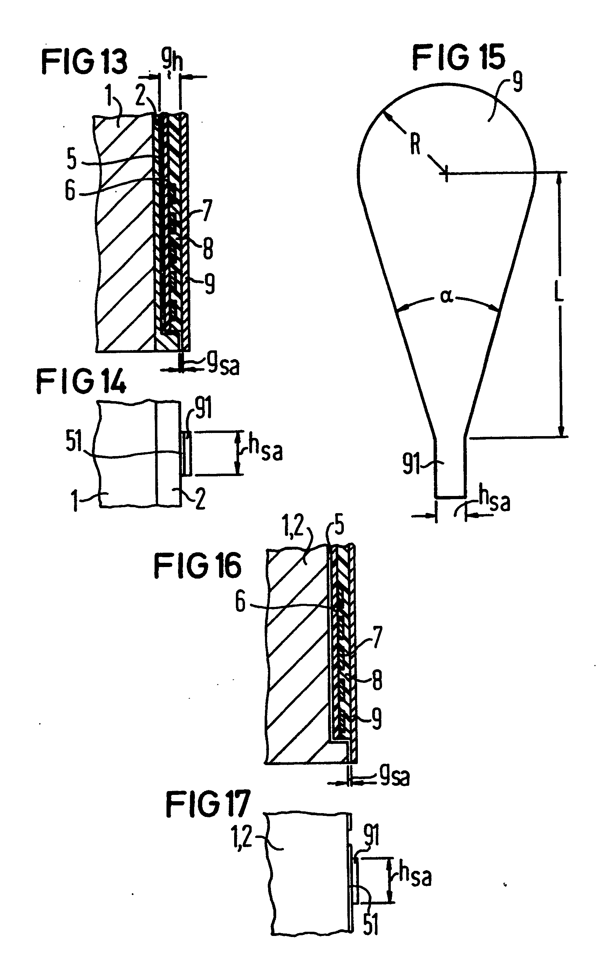

FIG 13 illustriert den weiteren Aufbau des Aufzeichnungssystems in einem Querschnitt. Die Magnetspule 7 wird mit einer zweiten, 1 bis 2 $\mu$m dicken Isolationsschicht 8 abgedeckt, darüber ist eine zweite weichmagnetische Schicht aus NiFe gelegt. Diese weitere weichmagnetische Schicht bildet die Deckschicht des magnetischen Aufzeichnungssystemes und schließt es ab. Dieser Abschluß ist derart gestaltet, daß er eben über der Grundschicht 2 liegt, d. h. die Deckschicht ist im Gegensatz zu der Deckschicht konventioneller Dünnfilm-Magnetköpfe vollkommen plan und liegt parallel zur Substratoberfläche. Damit ist prinzipiell das Aufzeichnungssystem fertig aufgebaut.

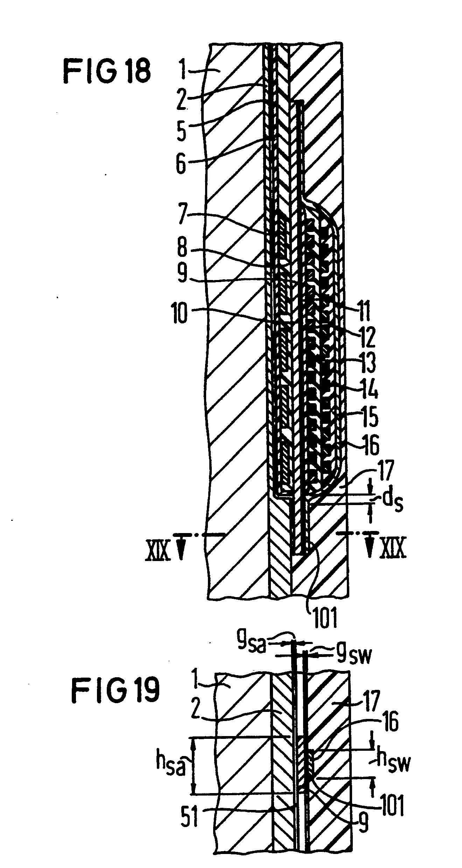

In FIG 14 ist dieses Aufzeichnungssystem in einer Frontansicht gezeigt. Diese Ansicht verdeutlicht den Magnetspalt 51 mit einer Spaltlänge $g_{sa}$, die die durchgängige weichmagnetische Grundschicht 2 von der weichmagnetischen Deckschicht 9, d. h. die beiden Kernschenkel voneinander trennt. Im Bereich einer Polzunge 91 hat diese Deckschicht 9 eine Polbreite $h_{sa}$. Aufgrund des Aufzeichnungsverfahrens entspricht diese Polbreite etwa auch der Breite einer aufzuzeichnenden Spur auf dem magnetischen Aufzeichnungsträger.

In FIG 15 ist die Oberflächengestalt der Deckschicht 9 dargestellt. Unten ist die Polzunge 91 mit der Polbreite $h_{sa}$ zu erkennen. Hinter der Polzunge 91 öffnet sich die Deckschicht 9 mit einem Öffnungswinkel $\alpha$ von weniger als 80°, vorzugsweise von etwa 40°, um günstige Streuverhältnisse bezüglich des Nebenspurlesens zu erreichen. An dem von der Polzunge 91 abgewandten Ende ist die Deckschicht 9 halbkreisförmig abgerundet. An diesem Ende liegt der Kontaktbereich zu der weichmagnetischen Grundschicht 2, die den zweiten Kernschenkel des Aufzeichnungssystemes bildet. FIG 15 zeigt, daß der Radius R der Umfangslinie im Kontaktbereich klein gegenüber einer Schenkellänge L ist, die vom Ansatzpunkt der Polzunge 91 bis zum Ort des Krümmungsmittelpunktes gemessen wird. Mit diesen Randbedingungen ergibt sich für die Umrißlinie der Deckschicht 9 in etwa eine birnenförmige Gestalt.

Gemäß einer weiteren, in FIG 16 bzw. 17 dargestellten Ausführungsform ist es denkbar, die Vertiefungen 21 von vornherein in einem magnetisch leitenden Substrat 1, 2 auszubilden. In diesem Fall entfällt das Aufbringen der weichmagnetischen Grundschicht 2. Auch könnte die anhand der FIG 3 bis 12 beschriebene Art der Strukturierung der Vertiefungen 21 anders ausgeführt werden. Als magnetisch leitende Schicht 1, 2 ließe sich heißgepreßtes Nickel-Zink-Ferrit oder Mangan-Zink-Ferrit verwenden. Die Vertiefungen 21 könnten durch Lasertechnik oder mechanische Bearbeitung in Form von in die Waferoberfläche eingegrabenen "Fürchen" gebildet werden. Im übrigen entspricht die in den FIG 16 bzw. 17 dargestellte Ausführungsform eines Aufzeichnungssystemes der anhand von FIG 13 bzw. 14 geschilderten Ausführungsform, so daß sich hier weitere Erläuterungen erübrigen.

Allen diesen Ausführungsformen ist gemeinsam, daß die Magnetspule 7 des Aufzeichnungssystems in die weichmagnetische Grundschicht 2 versenkt angeordnet ist. Damit wird eine ebene Fläche der Deckschicht 9 parallel über der Substratoberfläche erreicht, die es gestattet, als Wiedergabesystem ein separates zweites Magnetkopfsystem darauf aufzubauen, das wie bei konventionellen Dünnfilm-Magnetköpfen sogar eine zweilagige Magnetspule aufweisen kann.

Das auf dieser planen Oberfläche des Aufzeichnungssystemes angeordnete weitere Magnetkopfsystem läßt sich voll auf die Belange einer optimalen Wiedergabe ausrichten. Im Wiedergabesystem wird eine maximale Windungszahl angestrebt, um hohe Wiedergabespannung zu erreichen. Für eine optimale Wiedergabe muß die Spaltlänge angepaßt werden. Auch ist die Polbreite des Wiedergabesystemes an der Polzunge derart zu minimieren, daß bei gleicher Fehlerrate höhere Spurdichten auf dem magnetischen Aufzeichnungsträger möglich werden als es bisher mit konventionellen Aufzeichnungs/Wiedergabeköpfen in Dünnfilm-Technik möglich ist.

FIG 18 zeigt die vollständig aufgebaute Dünnfilm-Magnetkopfeinheit in einem Schnitt. Bei diesem Aufbau dient die weichmagnetische Deckschicht 9 des Aufzeichnungssystemes zugleich als Grundschicht für das Wiedergabesystem. Wegen dieser Mittenposition ist diese weichmagnetische Schicht von zentraler Bedeutung. Die weitere Schichtfolge des Wiedergabesystemes entspricht der Struktur konventioneller Dünnfilm-Magnetköpfe, so daß die Erläuterung kurz gefaßt werden kann. Da die zweite weichmagnetische Schicht 9 zugleich die Grundschicht für das Wiedergabesystem bildet, ist diese mit einer zweiten Siliziumoxidschicht 10 abgedeckt, mit der der Wiedergabespalt 101 gebildet wird. Darüber liegen eine weitere Isolierschicht 11, eine erste Spulenlage 12 der Wiedergabespule, eine weitere Isolierschicht 13, die zweite Spulenlage 14, eine weitere Isolierschicht 15 und eine weichmagnetische Deckschicht 16 aus NiFe. Diese Struktur, die das Wiedergabesystem darstellt, wird durch eine Protektionsschicht 17 beispielsweise aus AL203 abgedeckt.

In FIG 19 ist eine Frontansicht dieser eben geschilderten Dünnfilm-Magnetkopfeinheit schematisch gezeigt. Sie verdeutlicht die Polbreite $h_{sa}$, mit der eine Aufzeichnungsspur auf dem nicht dargestellten magnetischen Aufzeichnungsträger über den Aufzeichnungsspalt 51 mit der Spaltlänge $g_{sa}$ aufgezeichnet wird. Das magnetische Aufzeichnungsfeld schließt sich dabei von der weichmagnetischen Grundschicht 2 über den Aufzeichnungsspalt 51 und die weichmagnetische Schicht 9, die hier die Deckschicht des Aufzeichnungssystemes bildet. Bei einer Wiedergabe wird der Wiedergabespalt 101, gebildet durch die zweite Siliziumoxidschicht 10, mit seiner Spaltlänge $g_{sw}$ aktiv, wobei sich der Magnetisierungsvektor von der Aufzeichnungsspur des magnetischen Aufzeichnungsträgers über den Wiedergabespalt 101 zum Kurzschlußfluß über die weichmagnetischen Schichten 9 bzw. 16 schließt.

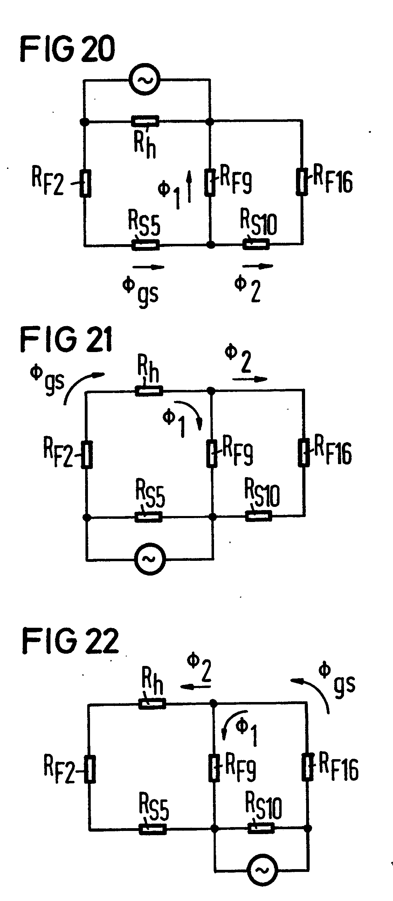

Um diese Aufzeichnungs/Wiedergabefunktionen, entkoppelt voneinander, in der gewünschten Weise ablaufen zu lassen, wird die Dünnfilm-Magnetkopfeinheit entsprechend dimensioniert, dies wird anhand von elektrischen Ersatzschaltbildern erläutert. FIG 20 zeigt das elektrische Ersatzschaltbild für die Dünnfilm-Magnetkopfeinheit in der Funktion "Aufzeichnung". Dabei ist die weichmagnetische Grundschicht 2 als ein erster Kernwiderstand $R_{F2}$, die weichmagnetische Schicht 9 als zweiter Kernwiderstand $R_{F9}$ und die weichmagnetische Deckschicht 16 des Wiedergabesystemes als dritter Kernwiderstand $R_{F16}$ repräsentiert Die Magnetkopfspalte 51 bzw. 101 sind durch die entsprechenden Spaltwiderstände $R_{s5}$ bzw. $R_{s10}$ im Ersatzschaltbild wiedergegeben. Schließlich enthält das Ersatzschaltbild einen parallel zu einer Stromquelle 18 liegenden Widerstand, der den Übergangswiderstand $R_h$ zwischen den weichmagnetischen Schichten 2 und 9, also der Grund- bzw. der Deckschicht des Aufzeichnungssystemes repräsentiert.

Bei einer Aufzeichnung von Daten auf den magnetischen Aufzeichnungsträger wird die Aufzeichnungsspule 7 erregt und damit der gesamte magnetische Fluß $\Phi_{ges}$ erzeugt. Dieser muß möglichst vollständig über den zweiten Kernschenkel des Aufzeichnungssystemes, d. h. die weichmagnetische Deckschicht 9 zurückfließen. Um dies zu erreichen, muß ein Verhältnis der magnetischen Flüsse gemäß der folgenden Beziehung

(1) $\Phi_2/\Phi_{ges} = R_{F2}/(R_{s2} + R_{F3})$

minimiert werden, wobei $\Phi_2$ den Streufluß über den Wiedergabespalt 101 darstellt.

Dies wird durch folgende Maßnahmen erreicht: Die den Mittelschenkel der Dünnfilm-Magnetkopfeinheit bildende magnetische Schicht 9 wird so dick ausgeführt, wie es technologisch vertretbar ist. Dabei wird mindestens ein Maß von 2 $\mu$m angestrebt. Die beschriebene Schenkellänge L (FIG 15) wird möglichst gering gehalten und sollte beispielsweise nicht länger als 80 $\mu$m sein.

Beim Wiedergabesystem wird die sogenannte Polhöhe $d_s$ (FIG 18) so gering wie möglich gehalten, d. h. es wird im komplettierten Zustand der Dünnfilm-Magnetkopfeinheit angestrebt, dieses Maß gegen Null gehen zu lassen. Weiterhin wird die Schichtdicke der Deckschicht 16 des Wiedergabesystemes auf das unbedingt für einen brauchbaren Wirkungsgrad notwendige Maß herabgesetzt.

Durch die Gesamtheit dieser Maßnahmen werden Flußverteilungsverhältnisse geschaffen, bei denen der über den Wiedergabespalt 101 und die Deckschicht 16 des Wiedergabesystems zurückfließende Anteil $\Phi_2$ des magnetischen Gesamtflusses $\Phi_{ges}$ derart gering gehalten wird, daß eine Beeinflussung des magnetischen Aufzeichnungsträgers in der Funktion "Aufzeichnung" durch das Wiedergabesystem vernachlässigbar gering ist. Außerdem wird der Wiedergabespalt $g_{sw} < g_{sa}$ derart ausgeführt, daß die Feldstärke über dem Wiedergabespalt vergleichsweise gering ausfällt.

Für die Erläuterung der Wiedergabefunktion werden die beiden Fälle unterschieden, in denen der Magnetisierungsvektor des magnetischen Aufzeichnungsträgers über dem Aufzeichnungsspalt 51 bzw. über dem Wiedergabespalt 101 liegt. Im ersten Fall soll möglichst kein Fluß durch die Wiedergabewicklung 12, 14 des Wiedergabesystems detektiert werden. Im zweiten Fall ist dagegen ein starker Fluß über die Kernschenkel des Wiedergabesystemes nötig, um in der Wiedergabespule 12, 14 eine hohe Wiedergabespannung zu induzieren.

Die beiden Ersatzschaltbilder von FIG 21 und 22 illustrieren jeweils einen dieser beiden Fälle. Im ersten Fall gilt es, das Flußverhältnis nach folgender Beziehung

(2) $\Phi_2/\Phi_{ges} = R_{F2}/(R_{F2} + R_h + R_{F1} + R_{s1})$,

im anderen Falle nach folgender Beziehung

(3) $\Phi_2/\Phi_{ges} = R_{F2}/(F_{F3} + R_{s2})$

zu minimieren.

Diese Minimierung gelingt durch folgende Maßnahmen. Im Aufzeichnungssystem wird zwischen den beiden weichmagnetischen Schichten, d. h. der Grundschicht 2 bzw. der Deckschicht 9 im Kontaktbereich ein Spalt mit der Spaltlänge $g_h$ vorgesehen (siehe FIG 13), der den magnetischen Übergangswiderstand $R_h$ bestimmt, d. h. es wird im Gegensatz zu konventionellen Dünnfilm-Magnetköpfen kein magnetischer Kurzschluß zwischen den beiden Kernschenkeln angestrebt. Dazu werden die Isolationsschichten 6 und 8 über die weichmagnetische Grundschicht 2 hinweggezogen. Außerdem wird die Spaltlänge $g_{sa}$ des Aufzeichnungsspalts 51 auch aus diesem Grunde über das sonst übliche Maß konventioneller Dünnfilm-Magnetköpfe hinaus vergrößert und etwa doppelt so groß wie die Spaltlänge $g_{sw}$ des Wiedergabespaltes 101 gewählt. Die Polhöhe $d_{sa}$ auch des Aufzeichnungssystemes wird nicht wesentlich größer als die des Wiedergabesystemes gewählt und liegt vorzugsweise in einem Bereich von 0,5 bis 1 $\mu$m.

Mit diesen Maßnahmen gelingt es, sowohl das Aufzeichnungssystem als auch das Wiedergabesystem getrennt jeweils für ihre eigene Funktion zu optimieren. Damit ist insgesamt eine Dünnfilm-Magnetkopfeinheit zu schaffen, die hinsichtlich der erzielbaren und beherrschbaren Speicherdichten auf einem magnetischen Aufzeichnungsträger einem konventionellen, aus einem kombinierten Magnetsystem bestehenden Dünnfilm-Magnetkopf überlegen ist. In der Größenordnung läßt sich mit den heute technologisch vorgegebenen Möglichkeiten somit eine Dünnfilm-Magnetkopfeinheit herstellen, die bereits jetzt eine Spurdichte von etwa 2000 tpi einerseits und eine lineare Speicherdichte von etwa 50 000 bpi andererseits bei Magnetplattenspeichern möglich macht.

**Ansprüche**

1. Dünnfilm-Magnetkopfeinheit, bei der auf einem Substrat (1) schichtweise ein magnetischer Leitkörper mit je einer weichmagnetischen Grund- und Deckschicht (2, 9 bzw. 9, 16) und eine dazwischen isoliert angeordnete Magnetspule (7 bzw. 12, 14) vorgesehen sind, **dadurch gekennzeichnet,** daß in der aus zwei übereinanderliegenden Magnetkopfsystemen (2, 5 bis 9 bzw. 9 bis 16) bestehenden Magnetkopfeinheit mit je einem zur Aufzeichnung bzw. Wiedergabe benutzten Magnetspalt (51 bzw. 101) die Magnetspule (7) des unmittelbar auf dem Substrat aufgebauten Magnetkopfsystemes (2, 5 bis 9) in der zugehörigen, einen der Magnetschenkel bildenden weichmagnetischen Grundschicht (2) derart vergraben angeordnet ist, daß die zugehörige, den anderen Magnetschenkel bildende Deckschicht (9) im wesentlichen plan und parallel zur Substratoberfläche verlaufend ausgebildet ist.

2. Dünnfilm-Magnetkopfeinheit nach Anspruch 1, **dadurch gekennzeichnet,** daß das innenliegende Magnetkopfsystem (2, 5 bis 9) das Aufzeichnungssystem bildet, dessen Magnetspule (7) einlagig ausgebildet ist und daß das außenliegende, das Wiedergabesystem bildende Magnetkopfsystem (9 bis 16) mit einer zweilagigen Magnetspule (12, 14) ausgestaltet ist, deren Windungszahl mindestens doppelt so groß ist wie die des Aufzeichnungssystemes.

3. Dünnfilm-Magnetkopfeinheit nach Anspruch 1 oder 2, **dadurch gekennzeichnet,** daß die weichmagnetische Deckschicht (9) des innenliegenden Magnetkopfsystemes (2, 5 bis 9) zugleich die Grundschicht für das außenliegende Magnetkopfsystem (9 bis 16) bildet.

4. Dünnfilm-Magnetkopfeinheit nach Anspruch 3, **dadurch gekennzeichnet,** daß die den gemeinsamen Kernschenkel beider Magnetkopfsysteme (2, 5 bis 9 bzw. 9 bis 16) bildende Deckschicht (9) des innenliegenden Magnetkopfsystemes eine Dikke von mindestens 2 $\mu$m aufweist.

5. Dünnfilm-Magnetkopfeinheit nach Anspruch 3 oder 4, **dadurch gekennzeichnet,** daß die Oberflächenform der den gemeinsamen Kernschenkel beider Magnetkopfsysteme (2, 5 bis 9 bzw. 9 bis 16) bildenden Deckschicht (9) des innenliegenden Magnetkopfsystemes einen Öffnungswinkel ( ) von weniger als 80° aufweist.

6. Dünnfilm-Magnetkopfeinheit nach Anspruch 5, **dadurch gekennzeichnet,** daß der Öffnungswinkel ( ) in der Größenordnung von 40° liegt.

7. Dünnfilm-Magnetkopfeinheit nach einem der Ansprüche 1 bis 6, **gekennzeichnet durch** eine Spaltlänge ($g_{sa}$) des Aufzeichnungssystemes (2, 5 bis 9) an einer Polzunge (91), die mindestens doppelt so groß ist wie die Spaltlänge ($g_{sw}$) des Wiedergabesystemes (9 bis 16).

8. Dünnfilm-Magnetkopfeinheit nach einem der Ansprüche 1 bis 7, **dadurch gekennzeichnet,** daß das Aufzeichnungssystem (2, 5 bis 9) in einem von der Polzunge (91) abgewandten, den Kontaktbereich zwischen seiner Grundschicht (2) und seiner Deckschicht (9) bildenden Teil ebenfalls einen Spalt mit einer vorgegebenen Spaltlänge ($g_h$) aufweist, der im Magnetfluß des Aufzeichnungssystemes einen definierten magnetischen Übergangswiderstand bewirkt.

9. Dünnfilm-Magnetkopfeinheit nach Anspruch 8, **dadurch gekennzeichnet,** daß die Spaltlänge ($g_h$) im Kontaktbereich der Magnetschenkel des Aufzeichnungssystemes (2, 5 bis 9) mindestens doppelt so groß ist wie die Spaltlänge ($g_{sa}$) an seiner Polzunge (91).

10. Dünnfilm-Magnetkopfeinheit nach einem der Ansprüche 3 bis 1, **dadurch gekennzeichnet,** daß die Breite der den gemeinsamen Kernschenkel beider Magnetkopfsysteme (2, 5 bis 9 bzw. 9 bis 16) bildende Deckschicht (9) des Aufzeichnungssystemes (2, 5 bis 9) im Bereich der Polzunge (91) um mindestens 2 $\mu$m breiter ist als die Breite der das Wiedergabesystem (9 bis 16) abschließenden weichmagnetischen Deckschicht (16).

11. Dünnfilm-Magnetkopfeinheit nach einem der Ansprüche 1 bis 10, **gekennzeichnet durch** ein Substrat (1), das aus einem weichmagnetischen Material besteht und damit gleichzeitig die Grundschicht (2) des innenliegenden Magnetkopfsystemes (2, 5 bis 9) bildet.

# FIG 1

# FIG 2

II

2

6

71

72

7

II

1

2

5

6

7

71

FIG 3

FIG 4

FIG 5

FIG 6

FIG 7

FIG 8

FIG 9

FIG 10

FIG 11

FIG 12

FIG 13

FIG 15

FIG 14

FIG 16

FIG 17

**FIG 18**

1
2
5
6

7
8
9
10

11
12
13
14
15
16

17

$d_S$

XIX

XIX

101

**FIG 19**

$g_{sa}$
$g_{sw}$

1
2

17
16

$h_{sa}$

$h_{sw}$

51

101

9

FIG 20

FIG 21

FIG 22

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN<br>vol. 10, no. 74 (P-439)(2131) 25 März 1986,<br>& JP-A-60 211609 (FUJITSU K.K.) 24 Oktober 1985,<br>* das ganze Dokument * | 1, 3, 8, 11 | G11B5/31<br>G11B5/265 |
| A | | 2, 10 | |
| A | PATENT ABSTRACTS OF JAPAN<br>vol. 8, no. 245 (P-312)(1682) 10 November 1984,<br>& JP-A-59 117726 (FUJITSU K.K.) 07 Juli 1984,<br>* das ganze Dokument *<br>--- | 1-3, 10 | |
| A | PATENT ABSTRACTS OF JAPAN<br>vol. 12, no. 300 (P-745)(3147) 16 August 1988,<br>& JP-A-63 071912 (HITACHI LTD) 01 April 1988,<br>* das ganze Dokument *<br>--- | 1, 3, 11 | |
| A | IBM TECHNICAL DISCLOSURE BULLETIN.<br>vol. 14, no. 4, September 1971, ARMONK N.Y. USA<br>Seiten 1283 - 1284; E. P. VALSTYN:<br>"COMPOSITE READ/WRITE RECORDING HEAD"<br>* das ganze Dokument *<br>--- | 1-3, 8, 9 | |
| A | EP-A-124293 (HEWLETT-PACKARD CO.)<br>* Seite 7, Zeile 27 - Seite 8, Zeile 19; Figur 3 *<br>--- | 1, 8 | **RECHERCHIERTE SACHGEBIETE (Int. Cl.5)**<br><br>G11B |
| A | EP-A-013363 (I.B.M. CORP.)<br>* Ansprüche 8, 12; Figuren 1, 2 *<br>--- | 1, 7 | |
| A | EP-A-012912 (I.B.M. CORP.)<br>* Seite 5, letzter Absatz - Seite 7, Absatz 2;<br>Figuren 1, 2 *<br>--- | 1, 5, 6 | |
| A | DE-A-3431047 (CANON K.K.)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 06 DECEMBER 1989 | FUX J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)